# EUROPEAN PATENT APPLICATION

(11) **EP 3 197 004 A1**
(43) Date of publication of application: **26.07.2017**
(21) Application number: 15849367.6
(22) Date of filing: 23.04.2015
(51) Int. Cl.: H02J 7/00

(54) **CHARGING METHOD AND RECHARGEABLE DEVICE**

(30) Priority: 10.10.2014 CN 201410531094
(71) Applicant: Huawei Technologies Co. Ltd., Shenzhen, Guangdong 518129 (CN)
(72) Inventor: WANG, Pinghua, Shenzhen Guangdong 518129 (CN); HUANG, Kangmin, Shenzhen Guangdong 518129 (CN)
(74) Representative: Pfenning, Meinig & Partner mbB
(86) International application number: PCT/CN2015/077246
(87) International publication number: WO 2016/054907

(57) **Abstract**

Embodiments of the present invention provide a charging method and a rechargeable device. The charging method includes: determining an effective current interval of a rechargeable device; performing matching between the effective current interval and a charging duration interval; determining target charging duration in the charging duration interval; determining a target charging current in the effective current interval according to the target charging duration; and performing charging by using the target charging current. In the embodiments of the present invention, target charging duration that is input by a user and falls within a charging duration interval is received, and then a target charging current is determined, so as to perform charging by using the target charging current. The target charging duration falls within the charging duration interval; therefore, the target charging current also matches the target charging duration, thereby improving accuracy of charging time and improving charging efficiency.

## Description

This application claims priority to Chinese Patent Application No. 201410531094.5, filed with the Chinese Patent Office on October 10, 2014 and entitled "CHARGING METHOD AND RECHARGEABLE DEVICE", which is incorporated herein by reference in its entirety.

### TECHNICAL FIELD

Embodiments of the present invention relate to the field of electronic technologies, and in particular, to a charging method and a rechargeable device.

### BACKGROUND

With the continuous development of electronic technologies, people depend more heavily on a rechargeable device such as a mobile phone and a tablet computer. Generally, the rechargeable device such as a mobile phone or a tablet computer uses a battery to supply power. When a battery level of the rechargeable device is low, the battery needs to be charged, so as to ensure normal working of the rechargeable device. With the popularity of intelligent terminals and wide application of large-screen, multi-core, and multi-function terminal technologies, a battery of a rechargeable device becomes a bottleneck technology of the terminal technologies, and a battery technology and a charging technology become a focus of a current research. A multi-stage or dynamic charging technology starts to be gradually applied to various types of rechargeable devices and supports multiple charging modes and a fast charging function.

In a charging method according to the prior art, at least two current values are preset. According to charging time input by a user, one current value in the preset current values is selected as a charging current value, so that time used for charging a battery based on the current value from remaining battery power to full battery power is not longer than target charging time, thereby adjusting a charging speed. However, when this method is used, the time input by the user does not well match the current value, and charging efficiency is still low.

### SUMMARY

Embodiments of the present invention provide a charging method and a rechargeable device, which can improve charging efficiency.

According to a first aspect, a charging method is provided, including: presenting, to a user, information that indicates a charging duration interval; receiving information that indicates target charging duration and is input by the user, where the target charging duration falls within the charging duration interval; determining a target charging current according to the target charging duration; and performing charging by using the target charging current.

With reference to the first aspect, in a first possible implementation manner of the first aspect, before the presenting, to a user, information that indicates a charging duration interval, the method further includes: determining an effective current interval of a rechargeable device; and determining the charging duration interval according to the effective current interval.

With reference to the first possible implementation manner of the first aspect, in a second possible implementation manner of the first aspect, the determining the charging duration interval according to the effective current interval includes: determining shortest charging duration and longest charging duration according to to-be-charged power, and an upper limit and a lower limit of the effective current interval; and determining the charging duration interval according to the shortest charging duration and the longest charging duration.

With reference to the second possible implementation manner of the first aspect, in a third possible implementation manner of the first aspect, the to-be-charged power is input by the user or is determined based on user activity information.

With reference to any one of the first to the third possible implementation manners of the first aspect, in a fourth possible implementation manner of the first aspect, the effective current interval is an intersection set of a limiting current interval of the rechargeable device and a limiting current interval of a charger.

With reference to the first aspect or any one of the first to the fourth possible implementation manners of the first aspect, in a fifth possible implementation manner of the first aspect, the presenting, to a user, information that indicates a charging duration interval includes: presenting, to the user, values that indicate the charging duration interval, and an area that is used to input a value of the target charging duration; or presenting, to the user, a first graph that indicates the charging duration interval, and a second graph that is used to select the target charging duration based on the first graph; or presenting, to the user, a voice input prompt and values that indicate the charging duration interval.

With reference to the first aspect or any one of the first to the fifth possible implementation manners of the first aspect, in a sixth possible implementation manner of the first aspect, the method further includes: presenting a value or a graph that indicates charging progress information, where the charging progress information includes at least one of remaining charging time, remaining to-be-charged power, a charging voltage, a charging current, a battery capacity, a battery temperature, and a battery lifespan.

According to a second aspect, a charging method is provided, including: determining a target using moment of a rechargeable device; determining target charging duration according to the target using moment; determining a target charging current according to the target charging duration; and performing charging by using the target charging current.

With reference to the second aspect, in a first possible implementation manner of the second aspect, the method further includes: acquiring user activity information; and the determining a target using moment of a rechargeable device includes: determining the target using moment according to the user activity information.

With reference to the first possible implementation manner of the second aspect, in a second possible implementation manner of the second aspect, the acquiring user activity information includes: acquiring time information of a user activity; or acquiring using power consumption information of the rechargeable device.

With reference to the second aspect or the first or the second possible implementation manner of the second aspect, in a third possible implementation manner of the second aspect, before the determining target charging duration according to the target using moment, the method further includes: determining an effective current interval of the rechargeable device; and determining a charging duration interval according to the effective current interval; and the determining target charging duration according to the target using moment includes: determining a time difference between the target using moment and a current moment; and when the time difference does not fall within the charging duration interval, determining the target charging duration according to an upper limit or a lower limit of the charging duration interval.

According to a third aspect, a rechargeable device is provided, including: a first presenting module, configured to present, to a user, information that indicates a charging duration interval; a receiving module, configured to receive information that indicates target charging duration and is input by the user, where the target charging duration falls within the charging duration interval; a first determining module, configured to determine a target charging current according to the target charging duration; and a charging module, configured to perform charging by using the target charging current.

With reference to the third aspect, in a first possible implementation manner of the third aspect, before the information that indicates the charging duration interval is presented to the user, the device further includes: a second determining module, configured to determine an effective current interval of the rechargeable device; and a third determining module, configured to determine the charging duration interval according to the effective current interval.

With reference to the first possible implementation manner of the third aspect, in a second possible implementation manner of the third aspect, the third determining module is specifically configured to determine shortest charging duration and longest charging duration according to to-be-charged power, and an upper limit and a lower limit of the effective current interval; and determine the charging duration interval according to the shortest charging duration and the longest charging duration.

With reference to the second possible implementation manner of the third aspect, in a third possible implementation manner of the third aspect, the to-be-charged power is input by the user or is determined based on user activity information.

With reference to any one of the first to the third possible implementation manners of the third aspect, in a fourth possible implementation manner of the third aspect, the effective current interval is an intersection set of a limiting current interval of the rechargeable device and a limiting current interval of a charger.

With reference to the third aspect or any one of the first to the fourth possible implementation manners of the third aspect, in a fifth possible implementation manner of the third aspect, the first presenting module is specifically configured to present, to the user, values that indicate the charging duration interval, and an area that is used to input a value of the target charging duration; or present, to the user, a first graph that indicates the charging duration interval, and a second graph that is used to select the target charging duration based on the first graph; or present, to the user, a voice input prompt and values that indicate the charging duration interval.

With reference to the third aspect or any one of the first to the fifth possible implementation manners of the third aspect, in a sixth possible implementation manner of the third aspect, the device further includes: a second presenting module, configured to present a value or a graph that indicates charging progress information, where the charging progress information includes at least one of remaining charging time, remaining to-be-charged power, a charging voltage, a charging current, a battery capacity, a battery temperature, and a battery lifespan.

According to a fourth aspect, a rechargeable device is provided, including: a first determining module, configured to determine a target using moment of the rechargeable device; a second determining module, configured to determine target charging duration according to the target using moment; a third determining module, configured to determine a target charging current according to the target charging duration; and a charging module, configured to perform charging by using the target charging current.

With reference to the fourth aspect, in a first possible implementation manner of the fourth aspect, the device further includes: an acquiring module, configured to acquire user activity information, where the first determining module is specifically configured to determine the target using moment according to the user activity information.

With reference to the first possible implementation manner of the fourth aspect, in a second possible implementation manner of the fourth aspect, the acquiring module is specifically configured to acquire time information of a user activity; or acquire using power consumption information of the rechargeable device.

With reference to the fourth aspect or the first or the second possible implementation manner of the fourth aspect, in a third possible implementation manner of the fourth aspect, the device further includes: a fourth determining module, configured to: before the target charging duration is determined according to the target using moment, determine an effective current interval of the rechargeable device; and determine a charging duration interval according to the effective current interval, where the third determining module is specifically configured to determine a time difference between the target using moment and a current moment; and when the time difference does not fall within the charging duration interval, determine the target charging duration according to an upper limit or a lower limit of the charging duration interval.

In the embodiments of the present invention, target charging duration that is input by a user and falls within a charging duration interval is received, and then a target charging current is determined, so as to perform charging by using the target charging current. The target charging duration falls within the charging duration interval; therefore, the target charging current also matches the target charging duration, thereby improving accuracy of charging time and improving charging efficiency.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of a charging system according to an embodiment of the present invention;
FIG. 2 is a schematic flowchart of a charging method according to another embodiment of the present invention;
FIG. 3 is a schematic diagram of a user interface of a rechargeable device according to another embodiment of the present invention;
FIG. 4 is a schematic diagram of a user interface of a rechargeable device according to another embodiment of the present invention;
FIG. 5 is a schematic structural diagram of a rechargeable device according to another embodiment of the present invention;
FIG. 6 is a schematic structural diagram of a rechargeable device according to another embodiment of the present invention;
FIG. 7 is a schematic flowchart of a charging method according to another embodiment of the present invention;
FIG. 8 is a schematic structural diagram of a rechargeable device according to another embodiment of the present invention; and
FIG. 9 is a schematic structural diagram of a rechargeable device according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

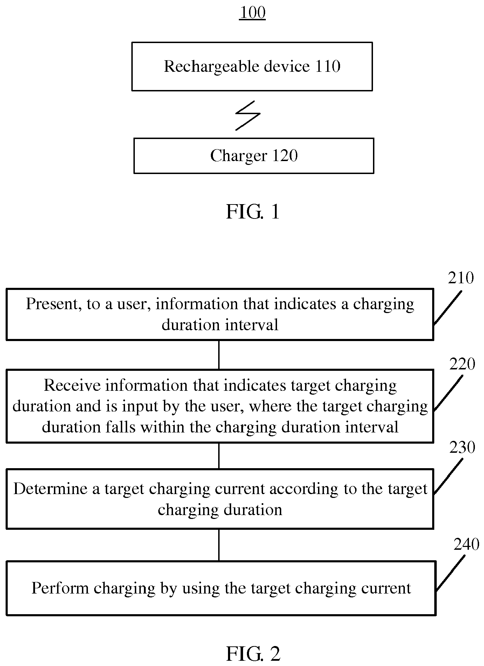

FIG. 1 is a schematic flowchart of a charging system according to an embodiment of the present invention. A charging system 100 includes a rechargeable device 110 and a charger 120. It should be understood that the rechargeable device 110 and the charger 120 may be separated or integrated. The rechargeable device 110 may include an operating system (such as an embedded system) and application programs (such as various types of application software). A charging system (such as a charging management module) identifies a charging time requirement of a user in a user setting manner, a system-associated manner, or a program-associated manner. All the operating system, the application programs, and the charging system are integrated into the rechargeable device.

In this embodiment of the present invention, a function of mutual identification between the charging system of the rechargeable device 110 and the charger 120 may be added. A charging current range that can be supported by the rechargeable device is analyzed by using the charging system, and longest charging duration and shortest charging duration that can be supported by the charger 120 are calculated, that is, a charging duration interval is calculated. With reference to a relationship between the charging time requirement of the user and the charging duration interval, and after determining is performed, a required and suitable charging current value is calculated or selected, so as to complete charging for a terminal device.

FIG. 2 is a schematic flowchart of a charging method according to another embodiment of the present invention. A method 200 in FIG. 2 is performed by a rechargeable device and includes the following steps:
210. Present, to a user, information that indicates a charging duration interval.
220. Receive information that indicates target charging duration and is input by the user, where the target charging duration falls within the charging duration interval.
230. Determine a target charging current according to the target charging duration.
240. Perform charging by using the target charging current.

For example, the target charging duration of the user is 45 min, and the charging duration interval is 30-120 min, so that the target charging duration of the user falls within the charging duration interval, and a required charging current is calculated according to the target charging duration 45 min of the user.

It should be understood that "an effective current interval" may refer to a current interval or range that meets normal working of the rechargeable device, or may refer to a current interval or range that meets normal working of an external charger (for example, in a case in which the charger and the rechargeable device are separated), or may be an intersection set thereof. An "interval" of the "effective current interval" or the "charging duration interval" refers to an upper limit and a lower limit of the interval. The upper limit and the lower limit may include or may not include other values in the interval, such as all values in the interval or multiple discrete values in the interval.

It should also be understood that this embodiment of the present invention may be applicable to a constant current charging stage of the chargeable device, or may be applicable to another scenario, for example, when performance of a battery or performance of the device meets constant current charging. Alternatively, in this embodiment of the present invention, a constant current charging process may be used to approximately estimate an entire charging process or a partial charging process.

In this embodiment of the present invention, target charging duration that is input by a user and falls within a charging duration interval is received, and then a target charging current is determined, so as to perform charging by using the target charging current. The target charging duration falls within the charging duration interval; therefore, the target charging current also matches the target charging duration, thereby improving accuracy of charging time and improving charging efficiency.

Optionally, as another embodiment, before the presenting, to a user, information that indicates a charging duration interval, the method in FIG. 2 further includes: determining an effective current interval of the rechargeable device; and determining the charging duration interval according to the effective current interval.

It should be understood that "determining an effective current interval of the rechargeable device" and "determining the charging duration interval" in the specification refer to determining an upper limit and a lower limit of an interval, and may include skipping determining other values in the interval or may include determining other values in the interval.

The determining the charging duration interval according to the effective current interval may refer to determining a lower limit of the charging duration interval according to to-be-charged power and an upper limit of the effective current interval, and determining an upper limit of the charging duration interval according to the to-be-charged power and a lower limit of the effective current interval; or based on consideration of a factor such as safety, selecting redundancy to determine an upper limit and a lower limit of the charging duration interval.

According to this embodiment of the present invention, the determining the charging duration interval according to the effective current interval includes: determining shortest charging duration and longest charging duration according to the to-be-charged power and the upper limit and the lower limit of the effective current interval; and determining the charging duration interval according to the shortest charging duration and the longest charging duration.

It should be understood that the to-be-charged power may be set by the user; or may be calculated according to related information of the user, for example, the to-be-charged power is estimated or calculated based on user activity information; or may be a default value. Performing matching between the effective current interval and the charging duration interval may refer to that a product of a value in the effective current interval and a corresponding value in the charging duration interval is the to-be-charged power or may be larger or smaller than the to-be-charged power, for example, based on consideration of safety or the performance of the battery.

In other words, the shortest charging duration and the longest charging duration are the upper limit and the lower limit of the charging duration interval. It should also be understood that in a case in which the product of the value in the effective current interval and the corresponding value in the charging duration interval is the to-be-charged power, when the shortest charging duration is used for charging, a maximum current in the effective current interval may be selected for charging; when the longest charging duration is used for charging, a minimum current in the effective current interval may be selected for charging. A standard charging current corresponding to standard charging duration may further be set.

The to-be-charged power is used to perform matching between the effective current interval and the charging duration interval, so that a charging process meets an actual requirement. In other words, charging for the to-be-charged power is completed in charging duration. Therefore, timely charging can be performed for the user, thereby improving user experience.

According to this embodiment of the present invention, the to-be-charged power is input by the user or is determined based on user activity information.

It should be understood that, that the to-be-charged power is input by the user may be, for example, acquiring a selection range of the to-be-charged power and presenting a selection interface of the to-be-charged power to the user; or may be presenting a user input interface and acquiring a value that is of to-be-charged power and input by the user. That the to-be-charged power is determined based on the user activity information may be analyzing a time parameter and a power consumption parameter that are in a system or an application program and are related to a user activity or a user behavior, and using energy consumption (time parameter x power consumption parameter) in a period of time as target using power of the user. Specifically, the user activity information may refer to, for example, a schedule, an alarm, a conference arrangement, or an appointment arrangement that is in the system of the rechargeable device and is related to the user, alarm time, schedule start time, conference start time, appointment start time, and the like; or a power consumption peak period that is of the rechargeable device and is monitored by an application such as a battery management guard, and start time of the power consumption peak period may be used; or, when the user uses a car charger, a navigation software application program may predict in advance time at which the user drives to a destination. It should be understood that the user activity information is not limited thereto, and may further include any data or information that can be used to estimate the to-be-charged power. The user activity information may be acquired from a program in the rechargeable device or may be set by the user.

According to this embodiment of the present invention, the effective current interval is an intersection set of a limiting current interval of the rechargeable device and a limiting current interval of a charger.

It should be understood that the standard charging current and the standard charging duration may be freely set according to a requirement of the user or performance of hardware, for example, may be set based on the performance of the rechargeable device or a battery lifespan.

The standard charging current and the standard charging duration may be set, so that when the user does not set charging duration in time, charging is completed in default duration by using a default current. Therefore, charging can be performed timely, and a specific requirement such as the battery lifespan can be met.

According to this embodiment of the present invention, the presenting, to a user, information that indicates a charging duration interval: presenting, to the user, values that indicate the charging duration interval, and an area that is used to input a value of the target charging duration; or presenting, to the user, a first graph that indicates the charging duration interval, and a second graph that is used to select the target charging duration based on the first graph; or presenting, to the user, a voice input prompt and values that indicate the charging duration interval.

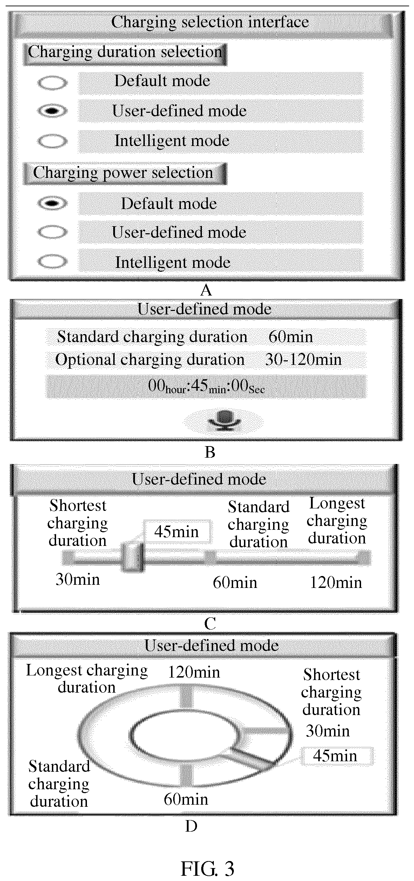

For example, a charging selection interface shown in FIG. A of FIG. 3 is used to select at least two of a default mode, a user-defined mode, or an intelligent mode. Charging duration selection or charging power selection may be presented by using a window, or both charging duration and charging power may be selected for presenting. The user performs selection by clicking a selection area of options in each mode, for example, by using a gesture.

The user-defined mode may be but is not limited to FIG. A, FIG. B, or FIG. C of FIG. 3. For example, in FIG. B of FIG. 3, the standard charging duration and the charging duration interval are presented to the user by using a window, and charging duration input by the user may be a value.

In FIG. C of FIG. 3, a selection bar and a selection block that can be moved on the selection bar are presented by using a window. The selection bar is marked with at least the shortest charging duration and the longest charging duration, and the selection bar may be further marked with the standard charging duration. A location of the selection block on the selection bar indicates target charging duration set by the user. A relationship between the location of the selection block on the selection bar and to-be-selected charging duration may be linear or nonlinear.

Inputting by means of selection makes an operation more convenient. A manner of inputting a value may ensure accuracy of charging time.

In FIG. D of FIG. 3, a selection ring is presented by using a window. A difference between an inner radius of the selection ring and an outer radius of the selection ring is a preset value. A location of a selection block on the selection ring indicates target charging duration set by the user. A location of the selection ring indicates preset to-be-selected charging duration.

This embodiment of the present invention is not limited to any interaction manner and presentation manner. The selection block or a slider may be in any color or may have any graph, and a presenting window may be at any location of a terminal screen. A voice may be input in any language, and may have a voice identifier that has a meaning.

Optionally, as another embodiment, the method in FIG. 2 further includes:
presenting a value or a graph that indicates charging progress information, where the charging progress information includes at least one of remaining charging time, remaining to-be-charged power, a charging voltage, a charging current, a battery capacity, a battery temperature, and a battery lifespan.

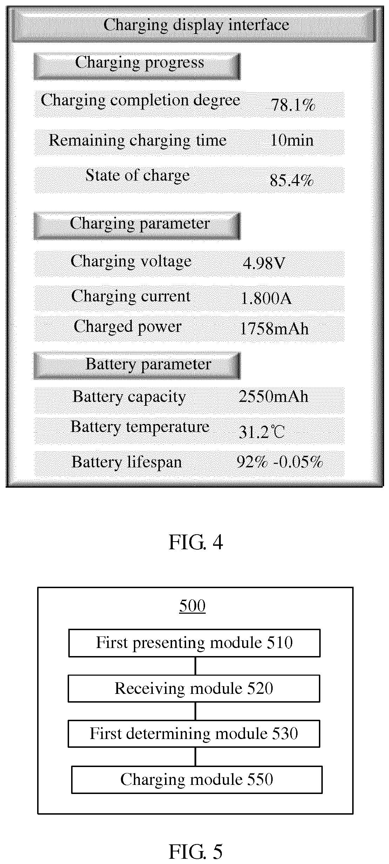

For example, a user interface shown in FIG. 4 may be used to present at least one of a charging progress, a charging parameter, and a battery parameter. The charging progress may include at least one of a charging completion degree, the remaining charging time, and information about a state of charge of a battery. The charging parameter may include at least one of the charging voltage, the charging current, and complete charging power. The battery parameter may include at least one of the battery capacity, the battery temperature, and the battery lifespan.

It should be understood that the charging progress information may be presented by using a percentage, for example, by using a value or a graph (a column graph, a ring graph, or a bar graph). Alternatively, the charging progress information may be presented by using a non-percentage value, for example, "remaining time is 10 minutes". This embodiment of the present invention is not limited to any presentation manner such as a combination of various graphs and colors. A window is used to intuitively display charging information, so that the user can view or check a charging-related parameter in real time, thereby further improving user experience.

The foregoing figures describe the charging method according to this embodiment of the present invention, and the following describes, with reference to FIG. 5, the rechargeable device according to this embodiment of the present invention.

FIG. 5 is a schematic structural diagram of a rechargeable device according to another embodiment of the present invention. A device 500 in FIG. 5 includes:
a first presenting module 510, configured to present, to a user, information that indicates a charging duration interval;
a receiving module 520, configured to receive information that indicates target charging duration and is input by the user, where the target charging duration falls within the charging duration interval;
a first determining module 530, configured to determine a target charging current according to the target charging duration; and
a charging module 540, configured to perform charging by using the target charging current.

In this embodiment of the present invention, target charging duration that is input by a user and falls within a charging duration interval is received, and then a target charging current is determined, so as to perform charging by using the target charging current. The target charging duration falls within the charging duration interval; therefore, the target charging current also matches the target charging duration, thereby improving accuracy of charging time and improving charging efficiency.

Optionally, as another embodiment, the device in FIG. 5 further includes: a second determining module, configured to: before the information that indicates the charging duration interval is presented to the user, determine an effective current interval of the rechargeable device; and a third determining module, configured to determine the charging duration interval according to the effective current interval.

According to this embodiment of the present invention, the third determining module is specifically configured to determine shortest charging duration and longest charging duration according to to-be-charged power, and an upper limit and a lower limit of the effective current interval; and determine the charging duration interval according to the shortest charging duration and the longest charging duration.

According to this embodiment of the present invention, the to-be-charged power is input by the user or is determined based on user activity information.

According to this embodiment of the present invention, the effective current interval is an intersection set of a limiting current interval of the rechargeable device and a limiting current interval of a charger.

According to this embodiment of the present invention, the first presenting module is specifically configured to present, to the user, values that indicate the charging duration interval, and an area that is used to input a value of the target charging duration; or present, to the user, a first graph that indicates the charging duration interval, and a second graph that is used to select the target charging duration based on the first graph; or present, to the user, a voice input prompt and values that indicate the charging duration interval.

Optionally, as another embodiment, the device in FIG. 5 further includes: a second presenting module, configured to present a value or a graph that indicates charging progress information, where the charging progress information includes at least one of remaining charging time, remaining to-be-charged power, a charging voltage, a charging current, a battery capacity, a battery temperature, and a battery lifespan.

For operations and functions of each module in FIG. 5, reference may be made to the description of FIG. 2, and details are not described herein.

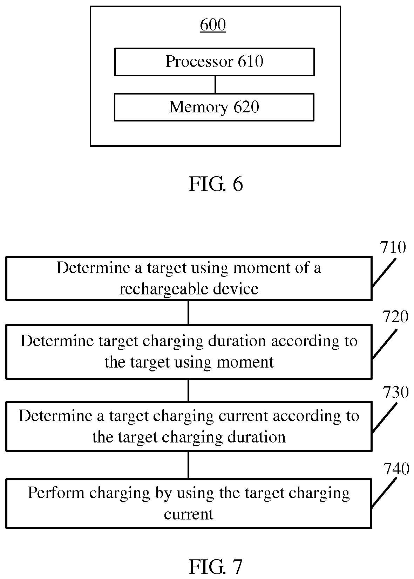

FIG. 6 is a schematic structural diagram of a rechargeable device according to another embodiment of the present invention. A rechargeable device 600 in FIG. 6 includes a processor 610 and a memory 620. The processor 610 invokes code in the memory 620 by using a communications bus so as to implement: presenting, to a user, information that indicates a charging duration interval; receiving information that indicates target charging duration and is input by the user, where the target charging duration falls within the charging duration interval; determining a target charging current according to the target charging duration; and performing charging by using the target charging current.

In this embodiment of the present invention, target charging duration that is input by a user and falls within a charging duration interval is received, and then a target charging current is determined, so as to perform charging by using the target charging current. The target charging duration falls within the charging duration interval; therefore, the target charging current also matches the target charging duration, thereby improving accuracy of charging time and improving charging efficiency.

According to this embodiment of the present invention, the processor 610 is further configured to: before the information that indicates the charging duration interval is presented to the user, determine an effective current interval of the rechargeable device; and determine the charging duration interval according to the effective current interval.

According to this embodiment of the present invention, the processor 610 is specifically configured to determine shortest charging duration and longest charging duration according to to-be-charged power, and an upper limit and a lower limit of the effective current interval; and determine the charging duration interval according to the shortest charging duration and the longest charging duration.

According to this embodiment of the present invention, the to-be-charged power is input by the user or is determined based on user activity information.

According to this embodiment of the present invention, the effective current interval is an intersection set of a limiting current interval of the rechargeable device and a limiting current interval of a charger.

According to this embodiment of the present invention, the processor 610 is specifically configured to present, to the user, values that indicate the charging duration interval, and an area that is used to input a value of the target charging duration; or present, to the user, a first graph that indicates the charging duration interval, and a second graph that is used to select the target charging duration based on the first graph; or present, to the user, a voice input prompt and values that indicate the charging duration interval.

According to this embodiment of the present invention, the processor 610 is further configured to present a value or a graph that indicates charging progress information, where the charging progress information includes at least one of remaining charging time, remaining to-be-charged power, a charging voltage, a charging current, a battery capacity, a battery temperature, and a battery lifespan.

For operations and functions of each module in FIG. 6, reference may be made to the description of FIG. 2, and details are not described herein.

In a charging method according to the prior art, at least two current values are preset. According to charging time input by a user, one current value in the preset current values is selected as a charging current value, so that time used for charging a battery based on the current value from remaining battery power to full battery power is not longer than target charging time, thereby adjusting a charging speed. However, by using this method, the user needs to input the time each time before performing charging, so that charging efficiency is still low.

In this embodiment of the present invention, a target using moment is determined, and then charging time is determined, and further charging is performed, thereby improving charging efficiency.

FIG. 7 is a schematic flowchart of a charging method according to another embodiment of the present invention. A method 700 in FIG. 7 is performed by a rechargeable device and includes the following steps:
710. Determine a target using moment of the rechargeable device.
720. Determine target charging duration according to the target using moment.
730. Determine a target charging current according to the target charging duration.
740. Perform charging by using the target charging current.

Optionally, as another embodiment, the method in FIG. 7 further includes: acquiring user activity information; and the determining a target using moment of the rechargeable device includes: determining the target using moment according to the user activity information.

It should be understood that the user activity information may include time information of a user activity, using power consumption information of the rechargeable device, or parameters such as a location and a behavior pattern of a user activity.

According to this embodiment of the present invention, the acquiring user activity information includes: acquiring the time information of the user activity; or acquiring the using power consumption information of the rechargeable device.

Specifically, the acquiring user activity information and the determining the target using moment according to the user activity information may be determining a time parameter as the target using moment of the user by using and analyzing the time parameter, where the time parameter is in a system or an application program and is related to the user activity or a user behavior. For example, the time parameter refers to a schedule, an alarm, a conference arrangement, an appointment arrangement, or the like that is in the system of the rechargeable device and is related to the user. Alarm time, schedule start time, conference start time, appointment start time, and the like may be used as the target using moment of the user. Alternatively, an application program such as a battery management guard may monitor a power consumption peak period of the rechargeable device, and start time of the power consumption peak period may be used as the target using moment of the user; or, when the user uses a car charger, a navigation software application program may predict in advance time at which the user drives to a destination, and the time is used as the target using moment of the user. The target using moment of the user can be intelligently predicted, so that a charging process can be completed without a need of manual setting of the user, which greatly facilitates use of the user.

Optionally, as another embodiment, before the determining, target charging duration according to the target using moment, the method in FIG. 7 further includes: determining an effective current interval of the rechargeable device; and determining a charging duration interval according to the effective current interval, where the determining target charging duration according to the target using moment includes: determining a time difference between the target using moment and a current moment; and when the time difference does not fall within the charging duration interval, determining the target charging duration according to an upper limit or a lower limit of the charging duration interval.

For example, the target charging duration of the user is 20 min, and the charging duration interval is 30-120 min. The target charging duration of the user falls beyond the charging duration interval; then a required charging current is calculated according to a lower limit value 30 min of the charging duration interval. If the target charging duration of the user is 150 min, the target charging duration of the user falls beyond the charging duration interval; then a required charging current is calculated according to an upper limit value 120 min of the charging duration interval. The determining the target charging duration according to an upper limit or a lower limit of the charging duration interval may further be directly skipping determining the upper limit or the lower limit as the target charging duration. For example, in consideration of a battery lifespan and another factor, a value close to the upper limit or the lower limit may be selected, such as 35 min or 115 min in this example.

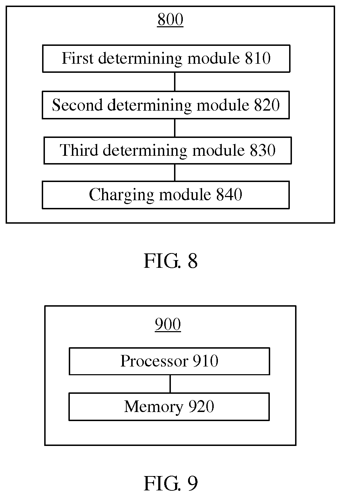

FIG. 8 is a schematic structural diagram of a rechargeable device according to another embodiment of the present invention. A device 800 in FIG. 8 includes:
a first determining module 810, configured to determine a target using moment of the rechargeable device;
a second determining module 820, configured to determine target charging duration according to the target using moment;
a third determining module 830, configured to determine a target charging current according to the target charging duration; and
a charging module 840, configured to perform charging by using the target charging current.

In this embodiment of the present invention, a target using moment is determined, and then charging time is determined, and further charging is performed, thereby improving charging efficiency.

Optionally, as another embodiment, the device in FIG. 8 further includes: an acquiring module, configured to acquire user activity information; and the first determining module is specifically configured to determine the target using moment according to the user activity information.

According to this embodiment of the present invention, the acquiring module is specifically configured to acquire time information of a user activity; or acquire using power consumption information of the rechargeable device.

Optionally, as another embodiment, the device in FIG. 8 further includes: a fourth determining module, configured to: before the target charging duration is determined according to the target using moment, determine an effective current interval of the rechargeable device; and determine a charging duration interval according to the effective current interval, where the third determining module is specifically configured to determine a time difference between the target using moment and a current moment; and when the time difference does not fall within the charging duration interval, determine the target charging duration according to an upper limit or a lower limit of the charging duration interval.

For operations and functions of each module in FIG. 8, reference may be made to the description of FIG. 7, and details are not described herein.

FIG. 9 is a schematic structural diagram of a rechargeable device according to another embodiment of the present invention. A rechargeable device 900 in FIG. 9 includes a processor 910 and a memory 920.

The processor 910 invokes code in the memory 920 by using a communications bus so as to implement: determining a target using moment of the rechargeable device; determining target charging duration according to the target using moment; determining a target charging current according to the target charging duration; and performing charging by using the target charging current.

In this embodiment of the present invention, a target using moment is determined, and then charging time is determined, and further charging is performed, thereby improving charging efficiency.

Optionally, as another embodiment, the processor 910 is further configured to acquire user activity information; the processor 910 is specifically configured to determine the target using moment according to the user activity information.

According to this embodiment of the present invention, the processor 910 is specifically configured to acquire time information of a user activity; or acquire using power consumption information of the rechargeable device.

Optionally, as another embodiment, the processor 910 is further configured to: before the target charging duration is determined according to the target using moment, determine an effective current interval of the rechargeable device; and determine the charging duration interval according to the effective current interval, where the processor 910 is specifically configured to determine a time difference between the target using moment and a current moment; and when the time difference does not fall within the charging duration interval, determine the target charging duration according to an upper limit or a lower limit of the charging duration interval.

For operations and functions of each module in FIG. 9, reference may be made to the description of FIG. 7, and details are not described herein.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in the embodiments of the present invention, "B corresponding to A" indicates that B is associated with A, and B may be determined according to A. However, it should also be understood that determining B according to A does not mean that B is determined only according to A, and B may also be determined according to A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc (CD), a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In summary, what is described above is merely exemplary embodiments of the technical solutions of the present invention, but is not intended to limit the protection scope of the present invention. Any modification, equivalent replacement, or improvement made without departing from the spirit and principle of the present invention shall fall within the protection scope of the present invention.

## Claims

1. A charging method, comprising:
presenting, to a user, information that indicates a charging duration interval;
receiving information that indicates target charging duration and is input by the user, wherein the target charging duration falls within the charging duration interval;
determining a target charging current according to the target charging duration; and
performing charging by using the target charging current.

2. The method according to claim 1, wherein before the presenting to a user, information that indicates a charging duration interval, the method further comprises:
determining an effective current interval of a rechargeable device; and
determining the charging duration interval according to the effective current interval.

3. The method according to claim 2, wherein:
the determining the charging duration interval according to the effective current interval comprises:
determining shortest charging duration and longest charging duration according to to-be-charged power, and an upper limit and a lower limit of the effective current interval; and
determining the charging duration interval according to the shortest charging duration and the longest charging duration.

4. The method according to claim 3, wherein the to-be-charged power is input by the user or is determined based on user activity information.

5. The method according to any one of claims 2 to 4, wherein the effective current interval is an intersection set of a limiting current interval of the rechargeable device and a limiting current interval of a charger.

6. The method according to any one of claims 1 to 5, wherein the presenting, to a user, information that indicates a charging duration interval comprises:
presenting, to the user, values that indicate the charging duration interval, and an area that is used to input a value of the target charging duration; or
presenting, to the user, a first graph that indicates the charging duration interval, and a second graph that is used to select the target charging duration based on the first graph; or
presenting, to the user, a voice input prompt and values that indicate the charging duration interval.

7. The method according to any one of claims 1 to 6, further comprising:
presenting a value or a graph that indicates charging progress information, wherein the charging progress information comprises at least one of remaining charging time, remaining to-be-charged power, a charging voltage, a charging current, a battery capacity, a battery temperature, and a battery lifespan.

8. A charging method, comprising:
determining a target using moment of a rechargeable device;
determining target charging duration according to the target using moment;
determining a target charging current according to the target charging duration; and
performing charging by using the target charging current.

9. The method according to claim 8, further comprising:
acquiring user activity information; and
the determining a target using moment of a rechargeable device comprises:
determining the target using moment according to the user activity information.

10. The method according to claim 9, wherein the acquiring user activity information comprises:
acquiring time information of a user activity; or
acquiring power consumption information of the rechargeable device.

11. The method according to any one of claims 8 to 10, wherein before the determining target charging duration according to the target using moment, the method further comprises:
determining an effective current interval of the rechargeable device; and
determining a charging duration interval according to the effective current interval; and
the determining target charging duration according to the target using moment comprises:
determining a time difference between the target using moment and a current moment; and
when the time difference does not fall within the charging duration interval, determining the target charging duration according to an upper limit or a lower limit of the charging duration interval.

12. A rechargeable device, comprising:
a first presenting module, configured to present, to a user, information that indicates a charging duration interval;
a receiving module, configured to receive information that indicates target charging duration and is input by the user, wherein the target charging duration falls within the charging duration interval;
a first determining module, configured to determine a target charging current according to the target charging duration; and
a charging module, configured to perform charging by using the target charging current.

13. The device according to claim 12, wherein before the information that indicates the charging duration interval is presented to the user, the device further comprises:
a second determining module, configured to determine an effective current interval of the rechargeable device; and
a third determining module, configured to determine the charging duration interval according to the effective current interval.

14. The device according to claim 13, wherein:
the third determining module is specifically configured to:
determine shortest charging duration and longest charging duration according to to-be-charged power, and an upper limit and a lower limit of the effective current interval; and
determine the charging duration interval according to the shortest charging duration and the longest charging duration.

15. The device according to claim 14, wherein the to-be-charged power is input by the user or is determined based on user activity information.

16. The device according to any one of claims 13 to 15, wherein the effective current interval is an intersection set of a limiting current interval of the rechargeable device and a limiting current interval of a charger.

17. The method according to any one of claims 12 to 16, wherein the first presenting module is specifically configured to present, to the user, values that indicate the charging duration interval, and an area that is used to input a value of the target charging duration; or
present, to the user, a first graph that indicates the charging duration interval, and a second graph that is used to select the target charging duration based on the first graph; or
present, to the user, a voice input prompt and values that indicate the charging duration interval.

18. The method according to any one of claims 12 to 17, further comprising:
a second presenting module, configured to present a value or a graph that indicates charging progress information, wherein the charging progress information comprises at least one of remaining charging time, remaining to-be-charged power, a charging voltage, a charging current, a battery capacity, a battery temperature, and a battery lifespan.

19. A rechargeable device, comprising:
a first determining module, configured to determine a target using moment of the rechargeable device;
a second determining module, configured to determine target charging duration according to the target using moment;
a third determining module, configured to determine a target charging current according to the target charging duration; and
a charging module, configured to perform charging by using the target charging current.

20. The device according to claim 19, further comprising:
an acquiring module, configured to acquire user activity information, wherein
the first determining module is specifically configured to determine the target using moment according to the user activity information.

21. The device according to claim 20, wherein the acquiring module is specifically configured to: acquire time information of a user activity; or
acquire using power consumption information of the rechargeable device.

22. The device according to any one of claims 19 to 21, further comprising: a fourth determining module, configured to: before the target charging duration is determined according to the target using moment,
determine an effective current interval of the rechargeable device; and
determine a charging duration interval according to the effective current interval, wherein
the third determining module is specifically configured to:
determine a time difference between the target using moment and a current moment; and
when the time difference does not fall within the charging duration interval, determine the target charging duration according to an upper limit or a lower limit of the charging duration interval.
